# EUROPÄISCHE PATENTSCHRIFT

(11) **EP 1 084 970 B1**
(45) Veröffentlichungstag und Bekanntmachung des Hinweises auf die Patenterteilung: **01.09.2004**
(21) Anmeldenummer: 00119672.4
(22) Anmeldetag: 08.09.2000
(51) Int. Cl.: B65G 47/88, B65G 47/26

(54) **Vorrichtung zum Anhalten von Stückgut, insbesondere Werkstückträgern oder Werkstücken, auf einem Stauförderer**
Device for stopping articles, especially workpiece carriers or workpieces, on an accumulation conveyor
Dispositif d' arrêt de pièces, notamment de porte-pièces ou pièces à usiner, sur un convoyeur à accumulation

(30) Priorität: 20.09.1999 DE 19945064
(43) Veröffentlichungstag der Anmeldung: 21.03.2001
(73) Patentinhaber: ROBERT BOSCH GMBH, 70442 Stuttgart (DE)
(72) Erfinder: Neuber, Michael, 71672 Marbach a. N. (DE); Küpferle, Harald, 74385 Pleidelsheim (DE)

(56) Entgegenhaltungen:
- DE-A- 1 958 798
- DE-A- 3 006 143
- DE-U- 9 319 511
- US-A- 4 638 756

## Beschreibung

### Stand der Technik

Die Erfindung geht aus von einer Vorrichtung zum Anhalten von Stückgut, insbesondere Werkstückträgern oder Werkstücken, auf einem Stauförderer nach dem Oberbegriff des Hauptanspruchs.

Eine beispielsweise aus der EP 36 955 B1 bekannte Vorrichtung zum Anhalten von Stückgut hat eine Sperrstellung und eine Durchgangsstellung. Sie ist an einer Längsseite eines Profilstabs des Stauförderers befestigt. In einem Gehäuse ist ein Stößel beweglich geführt und beaufschlagt einen Anschlagschenkel zum Eingriff in die Bewegungsbahn des Stückguts, der in eine Sperrstellung und eine Durchgangsstellung schwenkbar ist. Durch eine um den Stößel angeordnete Feder wird die Vorrichtung in die Sperrstellung gebracht. Wird das Stückgut durch die Vorrichtung angehalten, so drückt es auf den verschwenkbar gelagerten Anschlagschenkel und erbringt eine Kraft, die in Richtung der Durchgangsstellung wirkt. Der Anschlagschenkel stützt sich hierbei an einer Fläche des Stößels ab, der einerseits an einer dem Anschlagschenkel diametral gegenüberliegenden Fläche abgestützt wird. Andererseits stützt sich der Stößel an der Feder ab. Die Feder muß somit zum einen eine Kraft erbringen, um die Vorrichtung in der Sperrstellung zu halten. Zum andern muß die Feder auch eine Kraft erbringen, die der vom Stückgut erzeugten Kraft entgegenwirkt. Dadurch wird die Feder belastet, was zu erhöhtem Verschleiß führt.

Diese Vorrichtung ist außerdem recht aufwendig im Aufbau und insofern relativ teuer. Muß die Feder ersetzt werden, muß die gesamte Vorrichtung auseinandergebaut werden, da die Feder im Gehäuse der Vorrichtung angeordnet ist.

Schließlich ist die Vorrichtung nur als Vereinzeler für eine Bewegungsrichtung des Stückguts ausgelegt. Als Rücklaufsperre ist sie nicht vorgesehen.

### Vorteile der Erfindung

Die erfindungsgemäße Vorrichtung zum Anhalten von Stückgut, insbesondere Werkstückträgern oder Werkstücken, auf einem Stauförderer mit den kennzeichnenden Merkmalen des Hauptanspruchs hat demgegenüber den Vorteil, daß die Feder durch angehaltenes Stückgut nicht belastet wird, da sie nur eine Kraft erbringen muß, um die Vorrichtung in ihre Sperrstellung zu bringen. Außerdem ist die Vorrichtung einfach aufgebaut.

Eine besonders günstige und platzsparende Anordnung ergibt sich, wenn der Lagerschenkel unterhalb der Fördermittel des Stauförderers und in Sperrstellung vorzugsweise parallel zur Bewegungsbahn des Stückguts angeordnet ist.

Sind zwei Lagerschenkel und Anschlagschenkel vorgesehen, wobei der erste Lagerschenkel an einem ersten Profilstab und der zweite Lagerschenkel an einem zweiten Profilstab des Stauförderers schwenkbar gelagert ist und zwischen den zwei Anschlagschenkeln ein Anschlag für das Stückgut vorgesehen ist, so ergibt sich insgesamt eine große Anschlagfläche. Dadurch kann die durch die Vorrichtung auf das Stückgut übertragene Kraft symmetrisch zur Bewegungsrichtung angreifen, wodurch sich das Stückgut nicht verdreht.

Die Vorrichtung läßt sich zum Anhalten des Stückguts als Vereinzeler und Rücklaufsperre einsetzen, wenn der Anschlag eine erste Fläche hat, die in Sperrstellung im wesentlichen senkrecht zur Bewegungsbahn verläuft und wenn der Anschlag eine zweite Fläche hat, die so geneigt ist, daß das ankommende Stückgut in Bewegungsrichtung die Vorrichtung in die Durchgangsstellung drückt.

Es ist zweckmäßig, ein Element zum Verschwenken der Vorrichtung in die Durchgangsstellung aus der Bewegungsbahn des Stückguts vorzusehen, das vorzugsweise seitlich aus dem Stauförderer herausragt.

Durch einen Anschlag, der am Stauförderer befestigt ist und an dem die Vorrichtung zumindest in der Sperrstellung und vorzugsweise auch in der Durchgangsstellung anliegt, läßt sich auf einfache Weise die Bewegungsbahn der Vorrichtung begrenzen.

Die Dicke des Anschlags ist ferner so bemessen, daß in dem Bereich, in dem der Anschlag zwischen Rollen des Stauförderers hindurch in die Bewegungsbahn der Werkstückträger ragt, nur eine Rolle entfernt werden muß. Dadurch werden die Werkstückträger auch in diesem Bereich ohne zusätzliche Maßnahmen sicher gefördert.

Es ist vorteilhaft, den Stauförderer für ein Fördersystem für Stückgut, insbesondere für Werkstücke oder Werkstückträger, der folgenden Art vorzusehen: Das Fördersystem weist mindestens einen Stauförderer auf, vorzugsweise einen manuellen Stauförderer. An den Ecken des Stückguts des Fördersystems Radien sind vorzugsweise vorgesehen, die über die Seitenflächen des Stückguts hinausragen. Ist die Dicke des Anschlags entsprechend bemessen, so kann der Anschlagschenkel bzw. der Anschlag zwischen hintereinander angeordnetes, sich berührendes Stückgut greifen.

Ferner ist es vorteilhaft, wenn die Eckstücke der Werkstückträger Anschlagflächen haben, die entlang der Seitenflächen des Stückguts verlaufen und mit der Vorrichtung zusammenwirken. Dadurch sinkt der Verschleiß am Stückgut selbst.

An einem Arbeitsplatz dieses Fördersystems ist es zweckmäßig, vor und nach der Position für das Stückgut jeweils eine Vorrichtung anzuordnen, die sich spiegelbildlich gegenüberliegen.

Weitere Vorteile und vorteilhafte Weiterbildungen der erfindungsgemäßen Vorrichtung zum Anhalten von Stückgut, insbesondere Werkstückträgern oder Werkstücken, auf einem Stauförderer ergeben sich aus den Unteransprüchen und der Beschreibung.

### Zeichnung

Ein Ausführungsbeispiel der Erfindung ist in der Zeichnung dargestellt und in der nachfolgenden Beschreibung näher erläutert. Es zeigen:
- Figur 1: eine Draufsicht ein Fördersystem mit Stückgut,
- Figur 2: eine Draufsicht auf das Fördersystem nach Figur 1 ohne Stückgut,
- Figur 3: eine Seitenansicht des Fördersystems nach Figur 2 und
- Figur 4: eine Ansicht gemäß den Schnittlinien IV-IV in Figur 2.

### Beschreibung des Ausführungsbeispiels

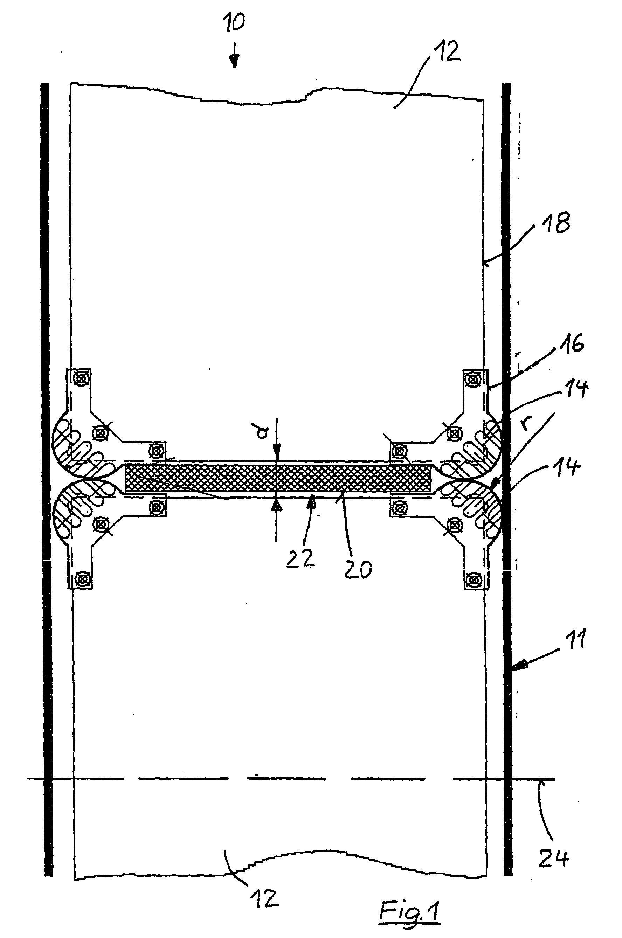

In der Figur 1 ist ausschnittsweise ein Fördersystem 10 mit einem Stauförderer 11 für Werkstückträger 12 dargestellt. Bei dem Stauförderer 11 handelt es sich um einen manuellen Staurollenförderer, auf dem die Werkstückträger 12 von Hand verschoben werden. Es sind jedoch auch andere Stauförderer 11, beispielsweise angetriebene Gurtförderer denkbar.

Statt den Werkstückträgern 12 kann es sich auch um anderes Stückgut, zum Beispiel Werkstücke selbst handeln. Die Werkstückträger 12 haben im vorliegenden Ausführungsbeispiel eine quadratische Grundfläche. An den Ecken der Werkstückträger 12 sind angeschraubte Eckstücke 14 vorgesehen. Die Eckstücke 14 sind als Winkel ausgebildet, die an den von den Werkstückträgern 12 abgewandten Seiten eine Bogenform mit einem Radius r haben, und weisen Anschlagflächen 16 auf, die zumindest teilweise entlang der angrenzenden Seitenflächen 18 der Werkstückträger 12 verlaufen.

Zwischen die zwei dargestellten Werkstückträger 12 greift ein Anschlag 20 einer Vorrichtung 22 zum Anhalten der Werkstückträger 12, der bzw. die über mehr als die Hälfte der Breite des Stauförderers 11 reicht. Wie aus der Figur 1 ersichtlich ist, ist der Radius r der Eckstücke 14 und die Dicke d des Anschlags 20 so bemessen, daß die Vorrichtung 22 zwischen die hintereinander angeordneten, sich berührenden Werkstückträger 12 greifen kann. Durch die Anschlagflächen 16 der Werkstückträger 12, die mit der Vorrichtung 22 zusammenwirken, wird der Verschleiß an den Werkstückträgern 12 vermindert. Hierzu ist die Länge des Anschlags 20 so bemessen, daß er die Anschlagflächen 16 berührt. Sind die Anschlagflächen 16 jedoch abgenutzt, können die Eckstücke 14 leicht ausgewechselt werden.

Die Dicke d des Anschlags 20 ist ferner so bemessen, daß in dem Bereich, in dem der Anschlag 20 zwischen den Rollen 28 hindurch in die Bewegungsbahn der Werkstückträger 12 ragt, nur eine Rolle 28 des Stauförderers 11 entfernt werden muß bzw. daß der Stauförderer 11 in diesem Bereich rollenfrei ist. Dadurch werden die Werkstückträger 12 auch in diesem Bereich ohne zusätzliche Maßnahmen sicher gefördert.

Die gestrichelte Linie 24 in der Figur 1, die quer zum Stauförderer 11 und durch die Mitte des Werkstückträgers 12 verläuft, stellt eine Symmetrieebene dar. Symmetrisch hierzu ist am Stauförderer 11 außer der gezeigten Vorrichtung 22 noch eine weitere, nicht dargestellte Vorrichtung 22 vorgesehen. Die zwei Vorrichtungen 22 schließen eine Bearbeitungsposition für den Werkstückträger 12 an einem ebenfalls nicht dargestellten Arbeitsplatz ein. Dadurch kann ein Werkstückträger 12 für eine Bearbeitung, Bestückung, Prüfung usw. leicht in seiner Position fixiert werden.

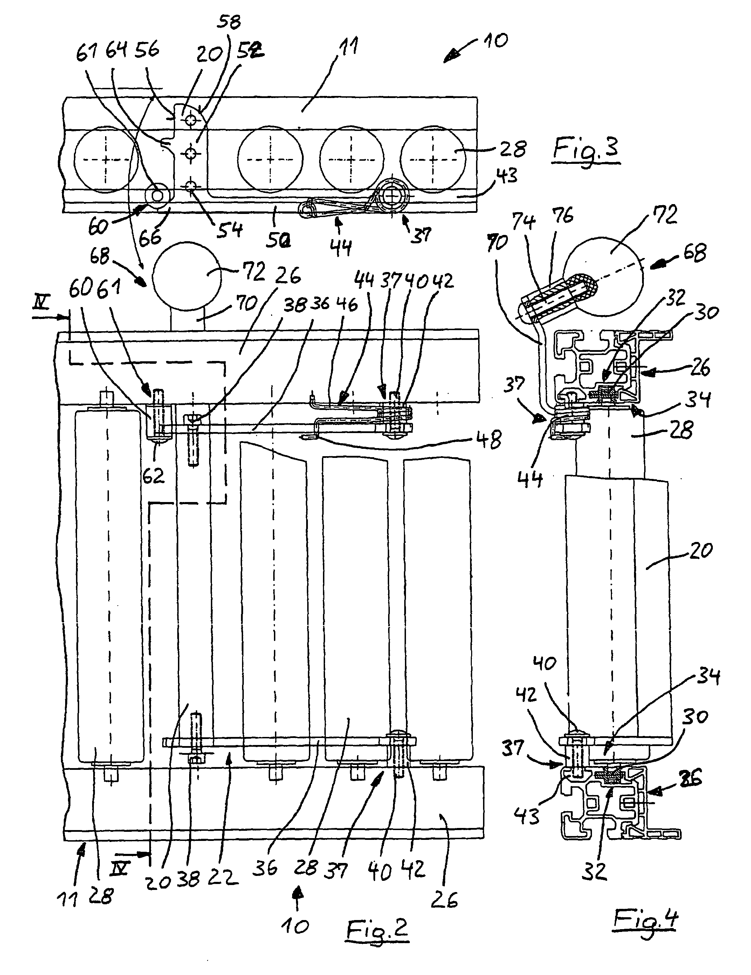

Wie aus der Figur 2, in der die Werkstückträger 12 nicht dargestellt sind, hervorgeht, besteht der Stauförderer 11 aus zwei parallel zueinander verlaufenden Profilstäben 26, zwischen denen Rollen 28 zum Transport der Werkstückträger 12 angeordnet sind. Die Rollen 28 sind in Leisten 30, die in Aufnahmen 32 von einander zugewandten Längsseiten 34 der Profilstäbe 26 angeordnet sind, gelagert (Figur 4).

Bis auf den Bereich des Anschlags 20 sind die Rollen 28 entlang des Stauförderers 11 in gleichmäßigen Abständen zueinander angeordnet. Die Dicke d des Anschlags 20 ist jedoch so bemessen, daß in dem Bereich, in dem der Anschlag 20 zwischen den Rollen 28 hindurch in die Bewegungsbahn der Werkstückträger 12 ragt, nur eine Rolle 28 des Stauförderers 11 entfernt werden muß. Dadurch werden die Werkstückträger 12 auch in diesem Bereich ohne zusätzliche Maßnahmen sicher gefördert.

Die Vorrichtung 22 hat in der Ansicht gemäß Figur 2 im wesentlichen eine U-Form. Der Anschlag 20 bildet hierbei den Basisschenkel, der parallel in einer Lücke zwischen zwei Rollen 28 und zwischen den parallelen, vorzugsweise als Blechstanzteile ausgebildeten U-Schenkeln 36 angeordnet ist. Zur Befestigung des Anschlags 20 an den U-Schenkeln 36 sind durch die U-Schenkel 36 Schrauben 38 geführt, die in den Anschlag 20 geschraubt sind.

An den vom Anschlag 20 entfernten Ende sind die U-Schenkel 36 an Lagerstellen 37 gelagert. Hierzu sind Schrauben 40 durch diese Enden der U-Schenkel 36 geführt. Zwischen den U-Schenkeln 36 und den Profilstäben 26 sind Buchsen 42 angeordnet, durch die die Schrauben 40 ebenfalls geführt sind. Die Schrauben 40 sind in nicht dargestellte Nutensteinen, die in unterhalb der Aufnahmen 32 verlaufenden Montagenuten 43 der Profilstäbe 26 (Figur 4) angeordnet sind, gedreht.

Vorzugsweise um die Buchse 42 der Lagerstelle 37 ist eine Feder 44 in Form einer Drehfeder angeordnet. Die Feder 44 stützt sich an einem Profilstab 26 bzw. dem Stauförderer 11 ab. Hierzu ist ein Schenkel 46 der Feder 44 an dem Profilstab 26 angeordnet, wobei dies vorzugsweise in der Montagenut 43 erfolgt. Der andere Schenkel 48 beaufschlagt den U-Schenkel 36 der Vorrichtung 22. Es ist auch möglich, andere Federn 44, beispielsweise Druckfedern oder Zugfedern vorzusehen. Durch eine Drehfeder und deren Anordnung ist jedoch ein einfacherer Aufbau gegeben.

Wie aus der Figur 2 hervorgeht, bringt die Feder 44 die Vorrichtung 22 in eine Sperrstellung. Hierbei ragt der Anschlag 20 in die Bewegungsbahn der Werkstückträger 12. Wird die Vorrichtung 22 entgegen der Federkraft der Feder 44 verschwenkt, so bewegt sich der Anschlag 20 unter eine durch die Rollen 28 gebildete Transportebene in eine Durchgangsstellung, in der die Werkstückträger 12 passieren können.

Die U-Schenkel 36 weisen jeweils einen Lagerschenkel 50 auf, der mit einem Ende schwenkbar am Stauförderer 11 gelagert ist. An dem Lagerschenkel 50 greift vorzugsweise die Feder 44 an. Der Lagerschenkel 50 ist unterhalb der Rollen 28 bzw. der Fördermittel des Stauförderers 11 und in Sperrstellung vorzugsweise parallel zur Bewegungsbahn der Werkstückträger 12 angeordnet.

Am andern Ende des Lagerschenkels 50 weisen die U-Schenkel 36 jeweils einen Anschlagschenkel 52 zum Eingriff in die Bewegungsbahn der Werkstückträger 12 auf, an dem der Anschlag 20 befestigt ist. Der Anschlagschenkel 52 verläuft im wesentlichen rechtwinklig zum Lagerschenkel 50. Sind die Fördermittel des Stauförderers 11 zum Beispiel Gurte, d.h. wenn genügend Platz vorhanden ist, so kann zwischen dem Anschlagschenkel 52 und dem Lagerschenkel 50 auch noch eine Verstärkungsrippe vorgesehen sein.

Im Anschlagschenkel 52 sind drei Durchgangsbohrungen 54 für die Schrauben 40 ausgebildet, mit denen der Anschlag 20 befestigt wird. Der Anschlag 20 hat im wesentlichen eine Querschnittsfläche, die der Außenkontur des Anschlagschenkels 52 entspricht. Eine erste Fläche 56 des Anschlags 20 auf der vom Lagerschenkel 50 abgewandten Seite des Anschlagschenkels 52 verläuft in der Sperrstellung der Vorrichtung 22 im wesentlichen senkrecht zur Bewegungsbahn der Werkstückträger 12. Dadurch wird ein ankommender Werkstückträger 12 angehalten, wenn sich die Vorrichtung 22 in ihrer Sperrstellung befindet. An der dem Lagerschenkel 50 zugewandten Seite des Anschlagschenkels 52 weist der Anschlag 20 vorzugsweise eine zweite Fläche 58 auf, die sich an die erste Fläche 56 anschließt. Die zweite Fläche 58 ist so geneigt bzw. gekrümmt, daß ein von dieser Seite ankommender Werkstückträger 12 die Vorrichtung 22 in die Durchgangsstellung drückt. Der Anschlag 20 ist vorzugsweise als Strangpreßteil aus Aluminium ausgebildet.

Aus den Figuren 2 und 3 geht hervor, daß ein Anschlag 60, der am Stauförderer 11 befestigt ist, zur Begrenzung des Verschwenkbereichs der Vorrichtung 22 vorgesehen ist. Der Anschlag 60 weist hierzu eine Buchse 61 auf, die mit einer Schraube 62 und einem nicht dargestellten Nutenstein an der Montagenut 43 befestigt ist. Am Anschlagschenkel 52 sind an der vom Lagerschenkel 50 abgewandten Seite zwei Fortsätze 64, 66 ausgebildet. Die Fortsätze 64, 66 sind so bemessen und beabstandet, daß die Vorrichtung 22 zumindest in der Sperrstellung am Fortsatz 66 anliegt. Der Fortsatz 64 ist nicht unbedingt notwendig; durch ihn wird jedoch auch der Verschwenkbereich bei einer Bewegung in Richtung der Durchgangsstellung begrenzt, wodurch die Feder 44 bei einer solchen Bewegung nicht überlastet werden kann.

Alternativ zum dargestellten Anschlag 60 kann im Anschlagschenkel 52 ein Langloch vorgesehen sein, in dem ein am Stauförderer 11 befestigtes Zapfenelement geführt ist. Ebenfalls kann der U-Schenkel 36 abgewinkelt sein oder einen Fortsatz aufweisen, der so angeordnet ist, daß er bei der Sperrstellung am Stauförderer 11 anliegt.

Aus den Figuren 2 und 4 ist ersichtlich, daß ein Element in Form eines Hebels 68 zum manuellen Verschwenken der Vorrichtung 22 in die Durchgangsstellung vorgesehen ist. Vorzugsweise ragt der Hebel 68 seitlich aus dem Stauförderer 11 heraus. Hierzu weist der Hebel 68 ein Blechteil 70 auf, das an einem U-Schenkel 36 angeordnet ist. An dem aus dem Stauförderer 11 herausragenden Ende ist ein Betätigungsknopf 72 mit Hilfe einer Schraube 74 und einer zwischen dem Betätigungsknopf 72 und dem Blechteil 70 angeordneten Buchse 76 befestigt. Alternativ kann auch vorgesehen sein, daß der Hebel 68, zum Beispiel über einen Seilzug, mit einem Fußpedal verbunden ist.

Ein ankommender Werkstückträger 12, der an der Fläche 56 anliegt, wird sicher gehalten. Durch eine Betätigung des Hebels 68 wird die Vorrichtung 22 in die Durchgangsstellung gebracht. Hat der Werkstückträger 12 den Anschlag 20 der Vorrichtung 22 passiert, so wird die Vorrichtung 22 durch die Feder 44 wieder in ihre Sperrstellung rückgestellt, so daß der nächste Werkstückträger 12 angehalten werden kann. In diesem Fall arbeitet die Vorrichtung 22 als sogenannter Vereinzeler.

Kommt der Werkstückträger 12 von der Seite der Vorrichtung 22 mit der geneigten bzw. gekrümmten Fläche 58 an, so drückt er auf einfache Weise die Vorrichtung 22 in ihre Durchgangsstellung. Hat der Werkstückträger 12 den Anschlag 20 der Vorrichtung 22 passiert, so wird die Vorrichtung 22 durch die Feder 44 ebenfalls wieder in ihre Sperrstellung rückgestellt. Der Werkstückträger 12 kann nun aber nicht mehr entgegen der vorigen Bewegungsrichtung zurückgefördert werden, da er an die Fläche 56 stoßen würde, außer die Vorrichtung 22 wird in ihre Ausgangsstellung gebracht. In diesem Fall arbeitet die Vorrichtung 22 als Rücklaufsperre.

Durch die beiden Flächen 56, 58 kann die Vorrichtung 22 somit für zwei Aufgaben verwendet werden; sie muß am Stauförderer 11 lediglich entsprechend ausgerichtet angebracht werden.

Durch die Anordnung des Lagerschenkels 50 zwischen dem Anschlagschenkel 52 und der Lagerstelle 37 ist die Vorrichtung 22 zum einen sehr einfach aufgebaut. Zum andern ist es möglich, daß die Vorrichtung 22 mit einer relativ geringen Federkraft der Feder 44 in die Sperrstellung gebracht wird. Diese Federkraft ist nur dafür notwendig, die Vorrichtung 22 in die Sperrstellung zu bringen. Von der Feder 44 muß zum Anhalten eines Werkstückträgers 12 keine Kraft aufgebracht werden, da die durch die Werkstückträger 12 eingeleiteten Kräfte über den Anschlag 20 in die Anschlagschenkel 52 geleitet wird. Durch den Verlauf der Lagerschenkel 50 werden die Kräfte über die Lagerstellen 37 so in den Stauförderer 11 eingeleitet, daß von der Feder 44 keine Kraft aufgebracht werden muß, die den durch die Werkstückträgern 12 erzeugten Kräfte entgegenwirken muß. Dadurch sinkt der Verschleiß. Vom Anschlag 61 muß lediglich noch eine Kraft aufgenommen werden, die die Vorrichtung 22 über die Sperrstellung hinaus drehen würde.

Für die Funktion reicht es im Prinzip aus, wenn die Vorrichtung 22 zumindest einen Lagerschenkel 50 und wenigstens einen Anschlagschenkel 52 aufweist. Ist aber an jedem der beiden Profilstäbe 26 jeweils ein schwenkbar gelagerter Lagerschenkel 50 und ein Anschlagschenkel 52 vorgesehen, wobei zwischen den beiden Anschlagschenkeln 52 der Anschlag 60 für die Werkstückträger 12 vorgesehen ist, so ergibt sich eine größere Auflagefläche für die Werkstückträger 12. Hierbei kommen insbesondere die Anschlagflächen 16 der Eckstücke 14 zum Tragen, mit denen die Werkstückträger 12 am Anschlag 20 anliegen.

## Patentansprüche

1. Vorrichtung (22) zum Anhalten von Stückgut (12), insbesondere Werkstückträgern oder Werkstücken, auf einem Stauförderer (11) mit einer Sperrstellung und einer Durchgangsstellung für das Stückgut (12), mit mindestens einem Anschlagschenkel (52) zum Eingriff in die Bewegungsbahn des Stückguts (12) und mit mindestens einer Feder (44) zum Rückstellen der Vorrichtung (22) in die Sperrstellung, **dadurch gekennzeichnet, daß** mindestens ein Lagerschenkel (50) vorgesehen ist, der unterhalb der Transportebene des Stauförderers (11) angeordnet ist und der an einem Ende schwenkbar am Stauförderer (11) gelagert ist und daß der mindestens eine Anschlagschenkel (52) zum Eingriff in die Bewegungsbahn des Stückguts (12) am andern Ende des mindestens einen Lagerschenkels (50) angeordnet ist.

2. Vorrichtung (22) nach Anspruch 1, **dadurch gekennzeichnet, daß** der mindestens eine Lagerschenkel (50) in Sperrstellung im wesentlichen parallel zur Bewegungsbahn des Stückguts (12) angeordnet ist.

3. Vorrichtung (22) nach Anspruch 1 oder 2, **dadurch gekennzeichnet, daß** an beiden Profilstäben (26) des Stauförderers (11) jeweils ein schwenkbar gelagerter Lagerschenkel (50) und ein Anschlagschenkel (52) vorgesehen ist, wobei zwischen den beiden Anschlagschenkeln (52) ein Anschlag (20) für das Stückgut (12) vorgesehen ist.

4. Vorrichtung (22) nach Anspruch 3, **dadurch gekennzeichnet, daß** der Anschlag (20) eine geneigte oder gekrümmte Fläche (58) zum Drücken der Vorrichtung (22) in die Durchgangsstellung bei auf die Fläche (58) treffendem Stückgut (12) hat.

5. Vorrichtung (22) nach Anspruch 3 oder 4, **dadurch gekennzeichnet, daß** der Anschlag (20) eine Fläche (56) hat, die in Sperrstellung im wesentlichen senkrecht zur Bewegungsbahn des Stückguts (12) verläuft.

6. Vorrichtung (22) nach einem der Ansprüche 1 bis 5, **dadurch gekennzeichnet, daß** ein Element (68) zum manuellen Verschwenken der Vorrichtung (22) in die Durchgangsstellung vorgesehen ist, das vorzugsweise seitlich aus dem Stauförderer (11) herausragt.

7. Vorrichtung (22) nach einem der Ansprüche 1 bis 6, **dadurch gekennzeichnet, daß** die Feder (44) mit einem Schenkel (46) in einer Ausnehmung (43) des Stauförderers (11) angeordnet ist und mit einem anderen Schenkel (48) die Vorrichtung (22), insbesondere den Lagerschenkel (50), beaufschlagt und daß die Feder (44) vorzugsweise um die Lagerstelle (37) des mindestens einen Lagerschenkels (50) angeordnet ist.

8. Vorrichtung (22) nach einem der Ansprüche 1 bis 7, **dadurch gekennzeichnet, daß** ein Anschlag (60) vorgesehen ist, der am Stauförderer (11) befestigt ist und an dem die Vorrichtung (22) zumindest in der Sperrstellung und vorzugsweise in der Durchgangsstellung anliegt.

9. Vorrichtung (22) nach einem der Ansprüche 1 bis 8, **dadurch gekennzeichnet, daß** die Dicke (d) des Anschlags (20) so bemessen ist, daß in dem Bereich, in dem der Anschlag (20) zwischen Rollen (28) des Stauförderers (11) hindurch in die Bewegungsbahn der Werkstückträger (12) ragt, der Stauförderer (11) rollenfrei ist.

10. Fördersystem (10) für Stückgut(12), insbesondere für Werkstücke oder Werkstückträger, mit mindestens einem Stauförderer (11), vorzugsweise einem manuellen Stauförderer (11) und mit mindestens einer Vorrichtung (22) nach einem der Ansprüche 1 bis 8, wobei an den Ecken des Stückguts (12) Eckstücke (14) mit Radien (r) vorgesehen sind, die über die Seitenflächen (18) des Stückguts (12) so weit hinausragen, und wobei die Dicke (d) des mindestens einen Anschlagschenkels (52) so bemessen ist, daß der mindestens eine Anschlagschenkel (52) der Vorrichtung (22) zwischen hintereinander angeordnetes, sich berührendes Stückgut (12) greifen kann.

11. Fördersystem (10) nach Anspruch 10, **dadurch gekennzeichnet, daß** die Eckstücke (14) des Stückguts (12) Anschlagflächen (16) haben, die zumindest teilweise entlang der angrenzenden Seitenflächen (18) des Stückguts (12) verlaufen und mit der Vorrichtung (22) zusammenwirken.

12. Fördersystem (10) nach Anspruch 10 oder 11, **dadurch gekennzeichnet, daß** an einem Arbeitsplatz vor und nach der erforderlichen Bearbeitungsposition für das Stückgut (12) jeweils eine Vorrichtung (22) angeordnet ist, die sich spiegelbildlich gegenüberliegen.

## Claims

1. Apparatus (22) for stopping articles (12), in particular workpiece carriers or workpieces, on an accumulating conveyor (11), having a blocking position and a through-passage position for the articles (12), having at least one stopping leg (52) for engaging in the movement path of the articles (12), and having at least one spring (44) for restoring the apparatus (22) into the blocking position, **characterized in that** at least one bearing leg (50) is provided, this being arranged beneath the transporting plane of the accumulating conveyor (11) and, at one end, being mounted in a pivotable manner on the accumulating conveyor (11), and **in that** the at least one stopping leg (52), for engaging in the movement path of the articles (12), is arranged at the other end of the at least one bearing leg (50).

2. Apparatus (22) according to Claim 1, **characterized in that** the at least one bearing leg (50), in the blocking position, is arranged essentially parallel to the movement path of the articles (12).

3. Apparatus (22) according to Claim 1 or 2, **characterized in that** in each case one pivotably mounted bearing leg (50) and one stopping leg (52) are provided on the two profile bars (26) of the accumulating conveyor (11), a stop (20) for the articles (12) being provided between the two stopping legs (52).

4. Apparatus (22) according to Claim 3, **characterized in that** the stop (20) has an inclined or curved surface (58) for forcing the apparatus (22) into the through-passage position when articles (12) come into contact with the surface (58).

5. Apparatus (22) according to Claim 3 or 4, **characterized in that** the stop (20) has a surface (56) which, in the blocking position, runs essentially perpendicularly to the movement path of the articles (12).

6. Apparatus (22) according to one of Claims 1 to 5, **characterized in that** an element (68) for pivoting the apparatus (22) manually into the through-passage position is provided, this element projecting preferably laterally out of the accumulating conveyor (11).

7. Apparatus (22) according to one of Claims 1 to 6, **characterized in that** the spring (44) has one leg (46) arranged in a recess (43) of the accumulating conveyor (11) and has another leg (48) acting on the apparatus (22), in particular the bearing leg (50), and **in that** the spring (44) is preferably arranged around the bearing location (37) of the at least one bearing leg (50).

8. Apparatus (22) according to one of Claims 1 to 7, **characterized in that** a stop (60) is provided, this being fastened on the accumulating conveyor (11) and butting against the apparatus (22) at least in the blocking position and preferably in the through-passage position.

9. Apparatus (22) according to one of Claims 1 to 8, **characterized in that** the thickness (d) of the stop (20) is dimensioned such that, in the region in which the stop (20) projects between rollers (28) of the accumulating conveyor (11) into the movement path of the workpiece carriers (12), the accumulating conveyor (11) is free of rollers.

10. Conveying system (10) for articles (12), in particular for workpieces or workpiece carriers, having at least one accumulating conveyor (11), preferably a manual accumulating conveyor (11), and having at least one apparatus (22) according to one of Claims 1 to 8, in which case corner components (14) with radii (r) are provided at the corners of the articles (12), these corner components projecting beyond the side surfaces (18) of the articles (12) to such an extent, and the thickness (b) of the at least one stopping leg (52) being dimensioned such that, the at least one stopping leg (52) of the apparatus (22) can engage between successive articles (12) which are in contact with one another.

11. Conveying system (10) according to Claim 10, **characterized in that** the corner components (14) of the articles (12) have stopping surfaces (16) which run, at least in part, along the adjacent side surfaces (18) of the articles (12) and interact with the apparatus (22).

12. Conveying system (10) according to Claim 10 or 11, **characterized in that** arranged at a workstation upstream and downstream of the necessary processing position of the articles (12) is in each case one apparatus (22), the two apparatuses being located opposite one another in a mirror-inverted manner.

## Revendications

1. Dispositif (22) pour arrêter des pièces (12) notamment des porte-pièces ou des pièces sur un convoyeur à accumulation (11), comportant une position de blocage et une position de passage pour la pièce (12), au moins une branche de butée (52) pour venir en prise dans la trajectoire de la pièce (12) et au moins un ressort (44) pour rappeler le dispositif (22) en position de blocage,
**caractérisé par**
au moins une branche de palier (50) placée sous le plan de transport du convoyeur à accumulation (11) et dont une extrémité est montée pivotante sur le convoyeur (11), et au moins une branche formant butée (52) pour venir en prise dans la trajectoire de la pièce (12) prévue à l'autre extrémité de cette branche de palier.

2. Dispositif (22) selon la revendication 1,
**caractérisé en ce qu'**
en position de blocage, au moins cette branche de palier (50) est parallèle à la trajectoire de la pièce (12).

3. Dispositif (22) selon la revendication 1 ou 2,
**caractérisé en ce que**
les deux profilés (26) du convoyeur à accumulation (11) portent chacun une branche de palier (50) montée pivotante et une branche de butée (52), et entre les deux branches de butée (52) il est prévu une butée (20) pour la pièce (12).

4. Dispositif (22) selon la revendication 3,
**caractérisé en ce que**
la butée (20) présente une surface inclinée ou courbe (58) pour pousser le dispositif (22) en position de passage lorsque la pièce (12) arrive sur la surface (58).

5. Dispositif (22) selon la revendication 3 ou 4,
**caractérisé en ce que**
la butée (20) comporte une surface (56) qui, en position de verrouillage, est essentiellement perpendiculaire à la trajectoire de la pièce (12).

6. Dispositif (22) selon l'une des revendications 1 à 5,
**caractérisé par**
un élément (68) pour basculer manuellement le dispositif (22) en position de passage, cet élément dépassant de préférence latéralement du convoyeur à accumulation (11).

7. Dispositif (22) selon l'une des revendications 1 à 6,
**caractérisé en ce que**
le ressort (44) est accroché par une branche (46) dans une cavité (43) du convoyeur à accumulation (11) et son autre branche (48) sollicite le dispositif (22) notamment la branche de palier (50), et le ressort (44) est prévu de préférence autour du point de palier (37) de cette branche de palier (50).

8. Dispositif (22) selon l'une des revendications 1 à 7,
**caractérisé par**
une butée (60) fixée au convoyeur à accumulation (11) et contre laquelle le dispositif (22) s'appuie au moins en position de blocage et de préférence en position de passage.

9. Dispositif (22) selon l'une des revendications 1 à 8,
**caractérisé en ce que**
l'épaisseur (d) de la butée (20) est dimensionnée pour que dans la zone dans laquelle la butée (20) passe entre les galets (28) du convoyeur à accumulation (11) pour venir dans la trajectoire du porte-pièce (12), le convoyeur à accumulation (11) ne comporte pas de rouleau.

10. Système de convoyeur (10) pour des pièces (12) notamment des pièces ou des porte-pièce ayant au moins un convoyeur à accumulation (11) de préférence un convoyeur à accumulation manuel (11) et au moins un dispositif (22) selon l'une des revendications 1 à 8,
dans lequel
des pièces de coin (14) avec un rayon (r) sont prévues au coin de la pièce (12), ces pièces de coin dépassant des surfaces latérales (18) de la pièce (12) suffisamment et l'épaisseur (d) d'au moins une branche de butée (52) étant dimensionnée pour qu'au moins une branche de butée (52) du dispositif (22) puisse prendre entre deux pièces (12) placées l'une derrière l'autre et qui se touchent.

11. Système de convoyeur (10) selon la revendication 10,
**caractérisé en ce que**
les pièces de coin (14) de la pièce (12) ont des surfaces de butée (16) dirigées au moins en partie le long des surfaces latérales adjacentes (18) de la pièce (12) et qui coopèrent avec le dispositif (22).

12. Système de convoyeur (10) selon la revendication 10 ou 11,
**caractérisé en ce qu'**
un poste de travail en amont et selon la position de travail requise pour la pièce (12) on a à chaque fois un dispositif (22) et ces dispositifs sont opposés suivant une symétrie plane.
